# EUROPEAN PATENT SPECIFICATION

(11) **EP 1 003 319 B1**
(45) Date of publication and mention of the grant of the patent: **25.10.2006**
(21) Application number: 98402853.0
(22) Date of filing: 17.11.1998
(51) Int. Cl.: H04M 11/06, H04L 5/06

(54) **Communication line terminating unit, modem and central office unit wherein the line terminating unit is used**
Kommunikationsleitungsabschlusseinheit, Modem und Telefonvermittlung mit einer solchen Einheit
Dispositif de termination de lignes de communication, un modem et un central téléphonique utilisants ce dispositif

(43) Date of publication of application: 24.05.2000
(73) Proprietor: ALCATEL, 75008 Paris (FR)
(72) Inventor: Vanzieleghem, Etienne, 1360 Perwijs (BE); Verbiest, Willem Jules Antoine, 9170 De Klinge (BE)
(74) Representative: Narmon, Gisèle Marie Thérèse

(56) References cited:
- EP-A- 0 740 451
- EP-A- 0 831 624

## Description

The present invention relates to a communication line terminating module as defined in claim 1, a digital subscriber line modem including such a communication line terminating module as defined in claim 6, and a digital subscriber line central office unit including such a communication line terminating module as defined in claim 7.

Further embodiments of the invention are set out in the dependent claims.

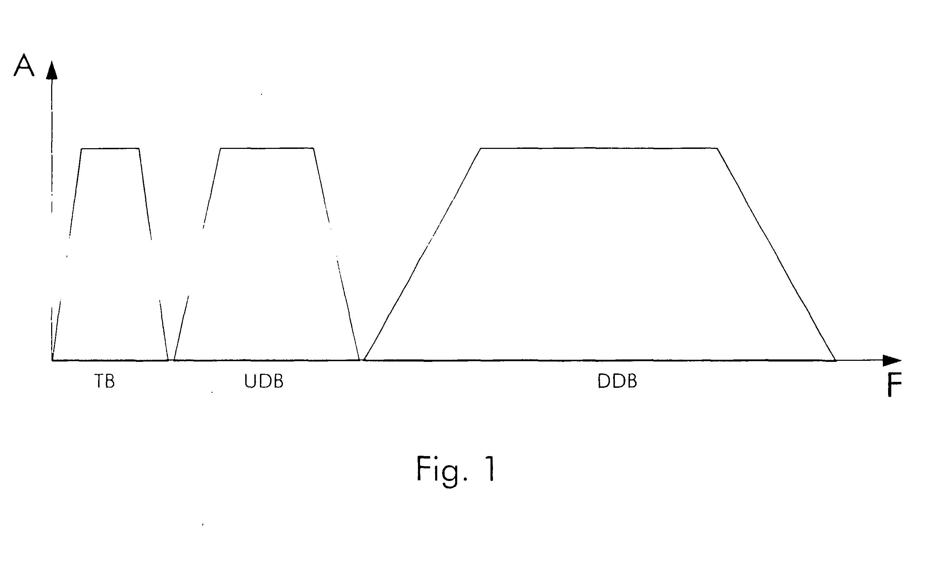

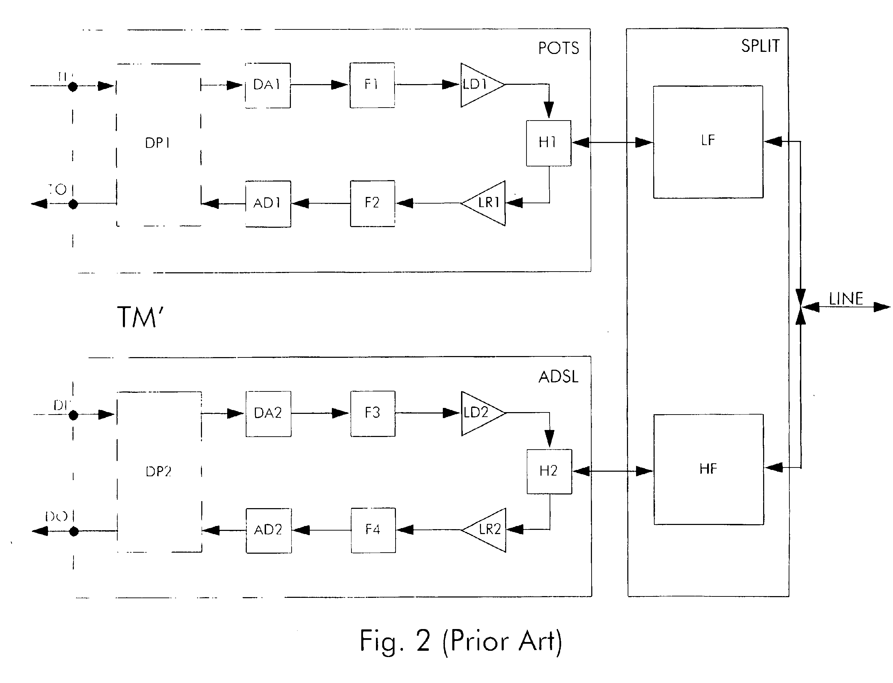

Such a communication line terminating module, digital subscriber line modem and digital subscriber line central office unit are already known in the art, e.g. from the contribution to the ANSI (American National Standard Institute) standard T1E1.4 on ADSL (Asymmetric Digital Subscriber Line) with reference T1E1.4/93-025. This standard contribution is entitled 'VLSI DMT Implementation for ADSL' and originates from Amati Communications Corporation. Therein, Fig. 1 and Fig. 2 illustrate that the central office unit and remote terminal of an ADSL system generally consist of a digital interface, a digital signal processor and an analogue interface. The analogue interface and digital signal processor thereof constitute a line terminating module as defined in the preamble of claim 1. The analogue interface of the known system is shown in more detail in Fig. 5 on page 9 of the cited standard contribution. This analogue interface comprises a POTS (Plain Old telephone Service) splitter, an ADSL arrangement whose functional components are drawn in Fig. 5, and a POTS arrangement with functional components that are not drawn in Fig. 5 but on abstract level are very similar to the components drawn for the ADSL arrangement. The POTS splitter combines telephone signals received from the POTS arrangement with digital data from the ADSL arrangement for transmission over the line. In the opposite direction, the POTS splitter separates digital data and telephone signals in a received signal and applies the telephone signals to the POTS arrangement whilst applying the digital data to the ADSL arrangement. The POTS arrangement as well as the ADSL arrangement each contain a transmitting path and a receiving path. The receiving path, as is illustrated for the ADSL arrangement only in Fig. 5, includes line coupling circuitry, a filter and automatic gain controller, an analogue to digital converter and a digital processor. Similarly, the transmitting path of the ADSL arrangement drawn in Fig. 5 of the cited standard contribution includes a digital signal processor, a digital to analogue converter DAC, a filter, amplifier and line coupling circuitry. These components are also found in the receiving path and transmitting path of the POTS arrangement as will be appreciated by a person skilled in the art. The analogue filters required in the POTS splitter of the known line terminating module to separate the telephone signals and digital data typically are very bulky and very expensive to make.

Document EP 0 740 451, published on 30^{th} October 1996, discloses an interface module which avoids the use of these bulky filters. In this document the speech signal is digitised and multiplexed with the data signal into a combined digital stream. This stream is modulated and transmitted in the ADSL band.

An object of the present invention is to provide a communication line terminating module of the above known type but wherein the use of bulky analogue filters for separating telephone signals and digital data is avoided.

According to the present invention, this object is realised by the communication line terminating module defined in claim 1, the digital subscriber line modem defined in claim 6 and the digital subscriber line central office unit defined in claim 7.

Indeed, if the communication line terminating module is provided with separating means which can separate received digital data from received telephone signals in the digital domain, and with combining means which can combine digital data to be transmitted with telephone signals to be transmitted in the digital domain, no bulky, analogue filters are required for this purpose.

Furthermore, the use of digital separating and combining means allows integration of the transmitting paths for telephone signals and digital data of the known line terminating module, and of the receiving paths for telephone signals and digital data of the known line terminating module. The line drivers, filters, and analogue to digital converters of the transmitting paths of the known line terminating module are integrated into a single line driver, filter and analogue to digital converter respectively, thus reducing the hardware complexity. Similarly, the gain controllers, filters and analogue to digital converters of the receiving paths of the known line terminating module are integrated into a single gain controller, filter and analogue to digital converter respectively, which even more reduces the hardware complexity.

A further advantage which results from the use of digital separation and combining means instead of an analogue POTS splitter is that no cabling is required between the splitting device, the telephone signal device and the digital data device whereas this was inevitable in the prior art solution.

Moreover, because digital separation means such as a digital filter enable to obtain a lower cut-off frequency between the telephone frequency band and the upstream digital data frequency band, the upstream capacity of ADSL-like systems is increased when the ADSL-like line terminating modules are made according to the present invention.

An additional advantage of the present invention is defined by claim 2.

Indeed, in an advantageous embodiment of the present invention, the digital separation means are implemented by a digital filter.

Another feature of the present invention is defined by claim 3.

Indeed, in an advantageous embodiment of the present invention, the digital combining means are implemented by a multiplexer such as a frequency domain multiplexer.

A further feature of the present communication line terminating module is defined in claim 4.

In this way, a line terminating module suitable for use in the central office of an ADSL-like environment wherein the telephone signals, upstream digital data and downstream digital data occupy successive frequency bands. To avoid influencing the received upstream digital data, the central office line terminating module must be provided with a notch-like filter in its transmitting path so that only the telephone signal frequency band and downstream digital data frequency band are passed.

Yet another advantageous feature of the present invention is defined by claim 5.

Thus, by providing a telephone signal conversion unit in the line terminating module at the customer's premises, one avoids that the customer has to buy and install a new telephone apparatus with an interface that can communicate directly with the digital separating and combining means.

The above mentioned and other objects and features of the invention will become more apparent and the invention itself will be best understood by referring to the following description of an embodiment taken in conjunction with the accompanying drawings wherein:
Fig. 1 is a diagram illustrating the frequency bands occupied by telephone signals and digital data in an ADSL-like system wherein the present invention is applicable;
Fig. 2 is a functional block scheme of an embodiment of a known line terminating module; and
Fig. 3 is a functional block scheme of an embodiment of the line terminating module according to the present invention.

The following tables give for each one of the above referenced figures, Fig. 1, Fig. 2 and Fig. 3, an overview of the abbreviations used. These abbreviations are also used throughout the following paragraphs wherein the structure and working of an embodiment of the present invention is compared with the structure and working of a known line terminating module.

### Abbreviations in Fig. 1:

| Abbreviation | Name |
|---|---|
| A | Amplitude |
| F | Frequency |
| TB | Telephone band |
| UDB | Upstream transmission digital data band |
| DDB | Downstream transmission digital data band |

### Abbreviations in Fig. 2:

| Abbreviation | Name |
|---|---|
| TM' | Communication Line Terminating Module |
| LINE | Communication line |
| POTS | Plain Old Telephone Service - device |
| ADSL | Asymmetric Digital Subscriber Line - device |
| SPLIT | Splitting device |
| DP1, DP2 | Digital processor |
| DA1, DA2 | Digital to analogue converter |
| AD1, AD2 | Analogue to digital converter |
| F1, F2, F3, F4 | Filter |
| LD1, LD2 | Line driver |
| LR1, LR2 | Line receiver |
| H1, H2 | Hybrid means |
| LF | Low pass frequency filter |
| HF | High pass frequency filter |
| TI' | Telephone signal input terminal |
| TO' | Telephone signal output terminal |
| Dl' | Digital data input terminal |
| DO' | Digital data output terminal |

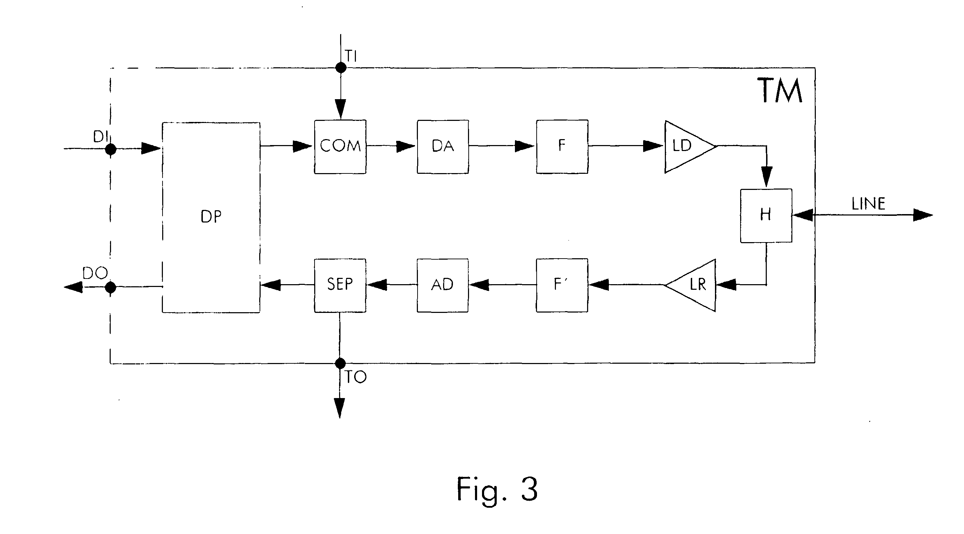

### Abbreviations in Fig. 3:

| Abbreviation | Name |
|---|---|
| TM | Communication Line Terminating Module |
| LINE | Communication line |
| DP | Digital processor |
| COM | Combining unit |
| SEP | Separating unit |
| DA | Digital to analogue converter |
| AD | Analogue to digital converter |
| F, F' | Filter |
| LD | Line driver |
| LR | Line receiver |
| H | Hybrid means |
| Dl | Digital data input terminal |
| DO | Digital data output terminal |
| TI | Telephone signal input terminal |
| TO | Telephone signal output terminal |

Fig. 1 shows three frequency bands, the telephone band TB, the upstream digital data band UDB and the downstream digital data band DDB of an ADSL (Asymmetric Digital Subscriber Line) system of the frequency domain multiplexing type. In such an ADSL system, telephone signals and digital data are simultaneously transmitted in two directions over a telephone line between a central office station and a user terminal. The digital data thereto occupy frequency bands completely separated from the frequency band occupied by telephony. Digital data transmitted in the direction from the user terminal to the central station are modulated on different carriers having frequencies within the upstream digital data band UDB. Digital data transmitted in the direction from the central station to the user terminal are modulated on carriers having frequencies within the downstream digital data band DDB. In addition to modulation/demodulation, it is a task of the transceivers in the central office and at the user's side to separate received telephone signals from received digital data and to combine transmitted telephone signals with transmitted digital data. A known transceiver capable thereto is drawn in Fig. 2, a transceiver according to the present invention capable thereto is drawn in Fig. 3.

The communication line terminating module TM' of Fig. 2 includes a splitting device SPLIT, a Plain Old Telephone Service - device POTS and an Asymmetric Digital Subscriber Line - device ADSL. Besides the terminating module TM', Fig. 2 shows a communication line LINE, which is supposed to be a twisted pair telephone line. The splitting device SPLIT contains an analogue low pass frequency filter LF and an analogue high pass frequency filter HF. The Plain Old Telephone Service - device POTS contains a first digital processor DP1, a first digital to analogue converter DA1, a first analogue to digital converter AD1, first and second filters F1 and F2, a first line driver LD1, a first line receiver LR1 and a first hybrid means H1. The Asymmetric Digital Subscriber Line - device ADSL includes a second digital processor DP2, a second digital to analogue converter DA2, a second analogue to digital converter AD2, third and fourth filters F3 and F4, a second line driver LD2, a second line receiver LR2 and a second hybrid means H2.

In the Plain Old Telephone Service - device POTS, the first digital processor DP1, the first digital to analogue converter DA1, the first filter F1, the first line driver LD1 and the first hybrid means H1 are cascade connected to form a telephone signal transmitting path between a telephone signal input terminal TI' of the Plain Old Telephone Service - device POTS and an input/output port thereof that is interconnected with a first input/output port of the splitting device SPLIT. The first hybrid means H1, the first line receiver LR1, the second filter F2, the first analogue to digital converter AD1 and the first digital processor DP1 further are cascade connected between this input/output port of the Plain Old Telephone Service - device POTS and a telephone signal output terminal TO' thereof to constitute a telephone signal receiving path. In a similar way, the second digital processor DP2, the second digital to analogue converter DA2, the third filter F3, the second line driver LD2 and the second hybrid means H2 in the Asymmetric Digital Subscriber Line - device ADSL are cascade connected between a digital data input terminal Dl' of the Asymmetric Digital Subscriber Line - device ADSL and an input/output port thereof which is interconnected with a second input/output port of the splitting device SPLIT to constitute a digital data transmitting path. The second hybrid means H2, the second line receiver LR2, the fourth filter F4, the second analogue to digital converter AD2 and the second digital processor DP2 further are cascade connected between the input/output port of the Asymmetric Digital Subscriber Line - device ADSL and a digital data output terminal DO' thereof to constitute a digital data receiving path. The first input/output port of the splitting device SPLIT is coupled to the communication line LINE via the low pass frequency filter LF whereas the second input/output terminal of this splitting device SPLIT is coupled to this communication line LINE via the high pass frequency filter HF.

If it is supposed that the line terminating module TM' is used in the central office of an ADSL (Asymmetric Digital Subscriber Line) system, then the signal received by the line terminating module TM' comprises a telephone signal in the telephone frequency band TB of Fig. 1 and digital data in the upstream transmission digital data band UDB of Fig. 1. The low pass frequency filter LF and high pass frequency filter HF in the splitting device SPLIT separate the incoming telephone signal from the incoming digital data. The incoming telephone signal is applied to the Plain Old Telephone Service - device POTS to be processed in the telephone signal receiving path thereof, whereas the digital data are applied to the Asymmetric Digital Subscriber Line - device ADSL to be processed by the digital data receiving path thereof. In the telephone signal receiving path, the first hybrid means H1 performs the line coupling, the first line receiver LR1 controls the gain of the received telephone signal to be suitable for processing, the second filter F2 is a low pass frequency filter suppressing the frequency band of transmitted telephone signals and the first analogue to digital converter AD1 digitises the incoming telephone signal. Thereafter, the first digital processor DP1 processes the digitised telephone signal for instance with noise reducing techniques, and sources the telephone signal via the telephone signal output terminal TO'. In the digital data receiving path, the second hybrid means H2 performs the line coupling, the second line receiver LR2 controls the gain of the received digital data to be suitable for further processing, the fourth filter F4 is a low pass filter suppressing the downstream transmission digital data band DDB of Fig. 1, and the second analogue to digital converter AD2 digitises the incoming digital data. Thereafter, the second digital processor DP2 performs the traditional digital processing steps of an ADSL central office unit, such as time domain equalisation, fourier transformation, frequency domain equalisation and symbol mapping. These digital processing steps and the functional components required in the second digital processor DP2 thereto, are described in the cited standard contribution T1E1.4/93-025 in paragraph 2.2 and Fig. 4. The second digital processor DP2 sources the received digital data via the digital data output terminal DO'.

The signal transmitted over the telephone line LINE by the line terminating module TM' of Fig. 2 contains a telephone signal in the telephone band TB of Fig. 1 and digital data in the downstream transmission digital data band DDB of Fig. 1. The telephone signal passes through the telephone signal transmitting path of the Plain Old Telephone Service - device POTS and the low pass filter LF of the splitting device SPLIT whereas the transmitted digital data pass through the transmitting path of the Asymmetric Digital Subscriber Line - device ADSL and the high pass filter HF of the splitting device SPLIT. In the transmitting path of the Plain Old Telephone Service - device POTS, the first digital processor DP1 processes telephone signals received at the telephone signal input terminal TI', the first digital to analogue converter DA1 converts the digital samples into an analogue signal, the first filter F1 is a high pass filter suppressing the frequency band of received telephone signals, the first line driver LD1 amplifies the outgoing telephone signal to be suitable for transmission over the telephone line LINE and the first hybrid means H1 performs the line coupling. In the transmitting path of the Asymmetric Digital Subscriber Line - device ADSL, the second digital processor DP2 performs the traditional digital processing steps of an ADSL transmitter such as bit allocation and inverse fourier transformation, the second digital to analogue converter DA2 transforms the outgoing digital data into an analogue signal, the third filter F3 is a high pass filter suppressing the upstream digital data band UDB of Fig. 1, the second line driver LD2 amplifies the outgoing digital data to be suitable for transmission over the telephone line LINE, and the second hybrid means H2 performs the line coupling.

As already explained in the introduction of this application, the architecture of the line terminating module TM' of Fig. 2 is disadvantageous because the analogue low pass filter LF and high pass filter HF in the splitting device SPLIT are very bulky and expensive to make, the architecture with a splitting device SPLIT, Plain Old Telephone Service - device POTS and Asymmetric Digital Subscriber Line - device ADSL requires cabling between these devices, the components in the Plain Old Telephone Service - device POTS and Asymmetric Digital Subscriber Line - device ADSL with similar functionality are not integrated at all so that the required hardware is not minimised, and the analogue low pass filter LF in the splitting device SPLIT typically has a quite high cut-off frequency thus reducing the capacity in the upstream digital data band UDB of Fig. 1.

The communication line terminating module TM drawn in Fig. 3 overcomes the disadvantages mentioned in the previous paragraph and thereto includes a digital processor DP, a digital combining element COM, a digital separation element SEP, a digital to analogue converter DA, an analogue to digital converter AD, two filters F and F', a line driver LD, a line receiver LD and a hybrid means H. In addition to the communication line terminating module TM, Fig. 3 also shows a communication line LINE that may again be supposed to be a telephone line.

The digital processor DP, the digital combining element COM, the digital to analogue converter DA, the filter F, the line driver LD and the hybrid means H are cascade connected between a digital data input terminal DI of the communication line terminating module TM and an input/output terminal thereof that is connected to the telephone line LINE. The combining element COM has an additional input whereto a telephone signal input terminal TI of the communication line terminating module TM is connected. In this way, a transmitting path is formed. The hybrid means H, the line receiver LR, the filter F', the analogue to digital converter AD, the digital separating means SEP and the digital processor DP further are cascade connected between the input/output port of the communication line terminating module TM and a digital data output terminal DO thereof. The digital separating element SEP is provided with an additional output connected to a telephone signal output terminal TO of the communication line terminating module TM. In this way, a receiving path is formed.

If it is again supposed that the communication line terminating module TM of Fig. 3 is used in the central office of an ADSL (Asymmetric Digital Subscriber Line) system, a signal received by the communication line terminating module of Fig. 3 contains a telephone signal in the telephone band TB of Fig. 1 and upstream sent digital data in the upstream digital data band UDB of Fig. 1. This signal is applied via the hybrid means H which performs line coupling, to the line receiver LR. This line receiver LR automatically controls the gain of the incoming signal so that the amplitude of this signal becomes suitable for processing by the other components in the receiving path of the communication line terminating module TM. The filter F' is a low pass filter which passes the telephone signal band TB and upstream digital data band UDB but blocks the downstream digital data band DDB so that interference of transmitted data on the receiving path is countered. After filtering the received signal, the analogue to digital converter AD digitises the signal and applies the samples to the digital separating element SEP which may be a digital filter that separates telephone signal samples from digital data samples. The telephone signal samples are sourced via the telephone signal output terminal TO whereas the digital data samples are supplied to the digital processor DP which again performs the traditional ADSL receiver processing steps such as equalising, fourier transforming and symbol mapping. The resulting digital data are sourced via the digital data output terminal DO of the communication line terminating module TM.

In the opposite direction, digital data are transmitted by the communication line terminating module TM in the downstream digital data band DDB and telephone signals are transmitted in the telephone band TB of Fig. 1. Digital data applied to the digital data input terminal DI thereto are processed in the digital processor DP which performs bitmapping and an inverse fourier transformation. In the digital combining element COM, the processed digital data are combined with samples of an outgoing telephone signal, applied to the telephone signal input terminal TI of the line terminating module TM in the digital combining element COM. The digital combining element COM for instance may be a digital frequency domain multiplexer. The combined telephone signal samples and digital data samples thereafter are transformed into an analogue signal. This is the task of the digital to analogue converter DA. The filter F is a notch like filter which suppresses the upstream digital data band UDB of Fig. 1 but passes the telephone signal band TB and downstream digital data band DDB. The filter F in other words counters influence of received signals on the transmitting path of the line terminating module TM. The line driver LD amplifies the outgoing signal so that it is suitable for transmission over the telephone line LINE and the hybrid means H performs line coupling also for the transmitting path.

A first remark is that although implementation of the present invention by the above described embodiment is illustrated for a frequency domain multiplexing system wherein the telephone signals and digital data occupy different frequency bands on the telephone line LINE, a person skilled in the art will appreciate that the basic idea of separating/combining digital data and telephone signals in the digital domain instead of in the analogue domain is also applicable in systems where for instance time domain multiplexing or even other types of multiplexing are used to allow combined transmission of telephone signals and digital data over a single telephone line. It is obvious that the type of multiplexing will have an effect on the actual implementation of the digital separating element SEP and digital combining element COM.

It is also noticed that although the above described line terminating module TM was supposed to form part of the central office of an ADSL system, a communication line terminating module according to the present invention may be used both at the central side or the user side. In case the line terminating module TM according to the present invention is integrated in the customers equipment, it is advantageous to provide a telephone signal unit between the digital separation element SEP and the telephone signal output terminal TO so that the user is not required to buy and install a new telephone. The telephone signal unit than has the task to convert the samples at the output of the digital separating element SEP into a standardised telephone signal.

Another remark is that, although the data symbols in the above described embodiment may be transported over a telephone line like in ADSL (Asymmetric Digital Subscriber Lines) or VDSL (Very High Speed Digital Subscriber Lines) systems, the applicability of the present invention is not restricted by the transmission medium via which the signal is transported. In particular, the present invention is applicable to connections over a cable, an optical fibre, a satellite link, a radio link through the air, and so on.

The invention also is not only related to systems wherein the ADSL (Asymmetric Digital Subscriber Line) or any similar physical layer protocol is used. A person skilled in the art will be able to adapt the above described embodiment so that it is applicable in any other system wherein both telephone signals or speech and digital data are simultaneously transmitted between two transceivers.

Another remark is that embodiments of the present invention are described above in terms of functional blocks. From the functional description of these blocks it will be obvious for a person skilled in the art of designing electronic devices how embodiments of these blocks can be manufactured with well-known electronic components. A detailed architecture of the contents of the functional blocks hence is not given for most of them.

## Claims

1. Communication line terminating module (TM) adapted to transmit and receive telephone signals and digital data respectively to and from a communication line (LINE),
said communication line terminating module (TM) comprising:
A. a receiving path (H, LR, F', AD, SEP, DP) for said telephone signals and said digital data, said receiving path (H, LR, F', AD, SEP, DP) being coupled between a communication line terminal on the one hand and both a telephone output terminal (TO) and a digital data output terminal (DO) on the other hand; and
B. a transmitting path (DP, COM, DA, F, LD, H) for said telephone signals and said digital data, said transmitting path (DP, COM, DA, F, LD, H) being coupled between both a telephone input terminal (TI) and a digital data input terminal (DI) on the one hand and said communication line terminal on the other hand;
C. whereby said receiving path (H, LR, F', AD, SEP, DP) comprises a cascade coupling of line coupling means (H), gain control means (LR), filter means (F') analogue to digital conversion means (AD), digital separating means (SEP) for separating said telephone signals in a POTS telephone band from said digital data in a digital data band, and digital processing means (DP), and further a coupling between an output of said digital processing means (DP) and said digital data output terminal (DO) and a coupling between an output of said digital separating means (SEP) and said telephone output terminal (TO); and
D. whereby said transmitting path (DP, COM, DA, F, LD, H) comprises a cascade coupling of digital processing means (DP), digital combining means (COM) for combining said telephone signals and said digital data into a signal comprising telephone signals in a POTS telephone band and digital data in at least one digital data band, digital to analogue conversion means (DA), filter means (F), line driver means (LD) and line coupling means (H), and further a coupling between said digital data input terminal (DI) and an input of said digital processing means (DP) and a coupling between said telephone input terminal (TI) and an input of said digital combining means (COM).

2. Communication line terminating module (TM) according to claim 1, whereby said digital separating means (SEP) comprises digital filtering means for separating said telephone signals from said digital data.

3. Communication line terminating module (TM) according to claim 1, whereby said digital combining means (COM) comprises digital multiplexing means for combining said telephone signals and said digital data.

4. Communication line terminating module (TM) according to claim 1, whereby said filter means in said transmitting path is a notch-like filter means, adapted to prevent leakage from said transmitting path (DP, COM, DA, F, LD, H) to said receiving path (H, LR, F', AD, SEP, DP) within a frequency range wherein said receiving path (H, LR, F', AD, SEP, DP) operates.

5. Communication line terminating module (TM) according to claim 1, whereby said receiving path (H, LR, F', AD, SEP, DP) further is provided with a telephone signal unit, coupled between said output of said digital separating means (SEP) and said telephone output terminal (TO), said telephone signal unit being adapted to convert an output signal of said digital separating means (SEP) into a standardised telephone signal.

6. Digital subscriber line modem including a communication line termination module (TM) as defined in any of claims 1 to 5.

7. Digital subscriber line central office unit including a communication line terminating module (TM) as defined in any of claims 1 to 5.

## Patentansprüche

1. Kommunikationsleitungsabschlussmodul (TM), das angepasst ist, Telefonsignale und digitale Daten zu einer Kommunikationsleitung (LINE) zu senden, bzw. von ihr zu empfangen, wobei das Kommunikationsleitungsabschlussmodul (TM) folgendes enthält:
A. Einen Empfangspfad (H, LR, F', AD, SEP, DP) für die Telefonsignale und die digitalen Daten, wobei der Empfangspfad (H, LR, F', AD, SEP, DP) zwischen einer Kommunikationsleitungsabschlusseinheit einerseits und sowohl einem Telefon-Ausgabe-Anschluss (TO) als auch einem Digitaldaten-Ausgabe-Anschluss (DO) andererseits angeschlossen ist; und
B. Einen Sendepfad (DP, COM, DA, F, LD, H) für die Telefonsignale und die digitalen Daten, wobei der Sendepfad (DP, COM, DA, F, LD, H) zwischen sowohl einem Telefon-Eingabe-Anschluss (TI), als auch einem Digitaldaten-Eingabe-Anschluss (DI) einerseits und der Kommunikationsleitungsabschlusseinheit andererseits angeschlossen ist;
C. wobei der Empfangspfad (H, LR, F', AD, SEP, DP) eine Reihenschaltung von Leitungs-Kopplungs-Mitteln (H), Verstärkungsregelungs-Mitteln (LR), Filter-Mitteln (F'), Analog-/Digital-Wandlungs-Mitteln (AD), digitalen Trennungs-Mitteln (SEP) zur Trennung der Telefonsignale in einem POTS-Telefonband von den digitalen Daten in einem Digitaldaten-Band, und Digitalverarbeitungs-Mitteln (DP) und weiterhin eine Kopplung zwischen einem Ausgang des Digitalverarbeitungs-Mittels (DP) und dem digitalen Daten-Ausgangs-Anschluss (DO) und eine Kopplung zwischen einem Ausgang der digitalen Trennungs-Mittel (SEP) und dem Telefon-Ausgangs-Anschluss (TO) enthält; und
D. wobei der Sendepfad (DP, COM, DA, F, LD, H) eine Reihenschaltung von Digitalverarbeitungs-Mitteln (DP), digitalen Kombinations-Mitteln (COM) zum Kombinieren der Telefonsignale und der digitalen Daten in ein Signal, das Telefonsignale in einem POTS-Telefonband und digitale Daten in mindestens einem Digitaldaten-Band enthält, Digital-/Analog-Wandlungs-Mitteln (DA), Filter-Mitteln (F), Leitungstreiber-Mitteln (LD) und Leitungs-Kopplungs-Mitteln (H), und weiterhin eine Kopplung zwischen dem digitalen Daten-Eingangs-Anschluss (DI) und einem Eingang des Digitalverarbeitungs-Mittels (DP) und eine Kopplung zwischen dem Telefon-Eingangs-Anschluss (TI) und einem Eingang des digitalen Kombinations-Mittels (COM) enthält.

2. Kommunikationsleitungsabschlussmodul (TM) gemäß Anspruch 1, wobei das digitale Trennungs-Mittel (SEP) Digitalfilter-Mittel enthält, um die Telefonsignale von den digitalen Daten zu trennen.

3. Kommunikationsleitungsabschlussmodul (TM) gemäß Anspruch 1, wobei das digitale Kombinations-Mittel (COM) digitale Multiplex-Mittel enthält, um die Telefonsignale und die digitalen Daten zu kombinieren.

4. Kommunikationsleitungsabschlussmodul (TM) gemäß Anspruch 1, wobei das Filter-Mittel im Sendepfad ein einem Kerbfilter ähnliches Filter-Mittel ist, das angepasst ist, in einem Frequenzbereich, in dem der Empfangspfad (H, LR, F', AD, SEP, DP) arbeitet, Streuungen vom Sendepfad (DP, COM, DA, F, LD, H) zum Empfangspfad (H, LR, F', AD, SEP, DP) zu verhindern.

5. Kommunikationsleitungsabschlussmodul (TM) gemäß Anspruch 1, wobei der Empfangspfad (H, LR, F', AD, SEP, DP) weiterhin mit einer Telefonsignal-Einheit ausgestattet ist, die zwischen dem Ausgang des digitalen Trennungs-Mittels (SEP) und dem Telefon-Ausgangs-Anschluss (TO) angeschlossen ist, wobei die Telefonsignal-Einheit angepasst ist, ein Ausgangssignal des digitalen Trennungs-Mittels (SEP) in ein standardisiertes Telefonsignal umzuwandeln.

6. Modem für eine digitale Teilnehmerleitung, das ein Kommunikationsleitungsabschlussmodul (TM) enthält, wie in einem beliebigen der Ansprüche 1 bis 5 definiert.

7. Telefonvermittlung für eine digitale Teilnehmerleitung, die ein Kommunikationsleitungsabschlussmodul (TM) enthält, wie in einem beliebigen der Ansprüche 1 bis 5 definiert.

## Revendications

1. Module de terminaison de ligne de communication (TM) adapté pour recevoir et émettre des signaux téléphoniques et des données numériques respectivement de et vers une ligne de communication (LINE), ledit module de terminaison de ligne de communication (TM) comprenant :
A) un chemin de réception (H, LR, F', AD, SEP, DP) pour lesdits signaux téléphoniques et lesdites données numériques, ledit chemin de réception (H, LR, F', AD, SEP, DP) étant couplé entre, d'un côté, un terminal de ligne de communication et, d'un autre côté, à la fois un terminal de sortie de signaux téléphoniques (TO) et un terminal de sortie de données numériques (DO) ; et
B) un chemin d'émission (DP, COM, DA, F, LD, H) pour les signaux téléphoniques et lesdites données numériques, ledit chemin d'émission (DP, COM, DA, F, LD, H) étant couplé entre, d'un côté, à la fois un terminal d'entrée de signaux téléphoniques (TI) et un terminal d'entrée de données numériques (DI) et, d'un autre côté, ledit terminal de ligne de communication ;
C) moyennant quoi ledit chemin de réception (H, LR, F', AD, SEP, DP) comprend une cascade couplant des moyens de couplage de ligne (H), des moyens de commande de gain (LR), des moyens de filtrage (F'), des moyens de conversion analogique numérique (AD), des moyens de séparation numérique (SEP) pour séparer lesdits signaux téléphoniques dans une bande téléphonique de service téléphonique ordinaire (POTS) desdites données numériques dans une bande de données numériques, et des moyens de traitement numérique (DP), et en outre un couplage entre une sortie desdits moyens de traitement numérique (DP) et ledit terminal de sortie de données numériques (DO) et un couplage entre une sortie desdits moyens de séparation numérique (SEP) et ledit terminal de sortie de signaux téléphoniques (TO) ; et
D) moyennant quoi ledit chemin d'émission (DP, COM, DA, F, LD, H) comprend une cascade couplant des moyens de traitement numérique (DP), des moyens de combinaison numérique (COM) pour combiner lesdits signaux téléphoniques et lesdites données numériques en un signal comprenant des signaux téléphoniques dans une bande de signaux téléphoniques POTS et des données numériques dans au moins une bande de données numériques, des moyens de conversion numérique analogique (DA), des moyens de filtrage (F), des moyens d'amplification de ligne (LD) et des moyens de couplage de ligne (H), et en outre un couplage entre ledit terminal d'entrée de données numériques (DI) et une entrée desdits moyens de traitement numérique (DP), et un couplage entre ledit terminal d'entrée de signaux téléphoniques (TI) et une entrée desdits moyens de combinaison numérique (COM).

2. Module de terminaison de ligne de communication (TM) selon la revendication 1, moyennant quoi lesdits moyens de séparation numérique (SEP) comprennent des moyens de filtrage numérique pour séparer lesdits signaux téléphoniques desdites données numériques.

3. Module de terminaison de ligne de communication (TM) selon la revendication 1, moyennant quoi lesdits moyens de combinaison numérique (COM) comprennent des moyens de multiplexage numérique pour combiner lesdits signaux téléphoniques et lesdites données numériques.

4. Module de terminaison de ligne de communication (TM) selon la revendication 1, moyennant quoi lesdits moyens de filtrage dans ledit chemin d'émission sont des moyens de filtrage de type réjecteur, adaptés pour éviter une perditance dudit chemin d'émission (DP, COM, DA, F, LD, H) au dit chemin de réception (H, LR, F', AD, SEP, DP) à l'intérieur d'une plage de fréquences dans laquelle fonctionne ledit chemin de réception (H, LR, F', AD, SEP, DP).

5. Module de terminaison de ligne de communication (TM) selon la revendication 1, moyennant quoi ledit chemin de réception (H, LR, F', AD, SEP, DP) est équipé en outre d'un dispositif de signaux téléphoniques, couplé entre ladite sortie desdits moyens de séparation numérique (SEP) et ledit terminal de sortie de signaux téléphoniques (TO), ledit dispositif de signaux téléphoniques étant adapté pour convertir un signal de sortie desdits moyens de séparation numérique (SEP) en un signal téléphonique standardisé.

6. Modem de ligne d'accès numérique comprenant un module de terminaison de ligne de communication (TM) tel qu'il est défini dans l'une quelconque des revendications 1 à 5.

7. Dispositif de commutateur local de ligne d'accès numérique comprenant un module de terminaison de ligne de communication (TM) tel qu'il est défini dans l'une quelconque des revendications 1 à 5.
